# EUROPEAN PATENT SPECIFICATION

(11) **EP 1 660 611 B1**
(45) Date of publication and mention of the grant of the patent: **11.04.2007**
(21) Application number: 04768089.7
(22) Date of filing: 16.08.2004
(51) Int. Cl.: C09K 19/40, G02F 1/141

(54) **BISTABLE FERROELECTRIC LIQUID CRYSTAL CELLS AND DEVICES USING SILOXANE OLIGMOMERS AND THE USE THEREOF**
BISTABILE FERROELEKTRISCHE FLÜSSIGKRISTALLZELLEN SOWIE -VORRICHTUNGEN MIT SILOXANOLIGOMEREN UND DEREN VERWENDUNG
CELLULES ET DISPOSITIFS A CRISTAUX LIQUIDES FERROELECTRIQUES BISTABLES UTILISANT DES OLIGOMERES DE SILOXANE ET UTILISATION DE CEUX-CI

(30) Priority: 16.08.2003 GB 0319269
(43) Date of publication of application: 31.05.2006
(73) Proprietor: Cambridge Enterprise Limited, Trinity Lane Cambridge Cambridgeshire CB2 1TN (GB)
(72) Inventor: CROSSLAND, William Alden, Essex CM20 2QD (GB); DAVEY, Anthony Bernard, Cambridge CB1 3LR (GB)
(74) Representative: Hedley, Nicholas James Matthew
(86) International application number: PCT/GB2004/003529
(87) International publication number: WO 2005/019380

(56) References cited:
- US-A- 5 498 368
- US-A1- 2003 017 278
- PATENT ABSTRACTS OF JAPAN vol. 0134, no. 02 (C-633), 6 September 1989 (1989-09-06) & JP 1 144491 A (TOSHIBA CORP), 6 June 1989 (1989-06-06) cited in the application

## Description

The present invention relates to a cell comprising a ferroelectric compound having a smectic C phase, arranged between alignment layers of polyamide or polyester, a device comprising said cell and a process for bistable switching of the device.

Ferroelectric liquid crystal (FLC) devices are based on chiral smectic liquid crystals (as described by J. Dijon in Chapter 13 (pages 307-354) of "Liquid Crystals Applications and Uses, Vol. 1, edited by B. Bahadur, published by World Scientific Publishing co. Pte. Ltd (Singapore) in 1990). In particular cells arranged in bookshelf geometry are described (see page 309). These are very thin cells, for example 1 to 10µm thick, arranged between alignment layers. The boundary conditions imposed by the alignment layers are strong enough to suppress the helix structure of the chiral smectic liquid crystal. The smectic layers are generally perpendicular to the cell plates but are capable of switching between two optical states which are at respective angles (the tilt angle) to the perpendicular.

US-A-5498368 describes a siloxane- containing compound having the general formula 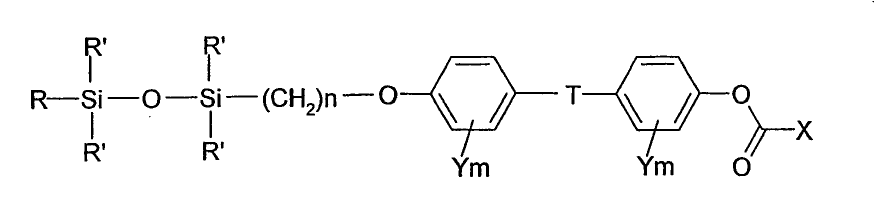 wherein R represents an alkyl group having from 1 to 10 carbon atoms or the group 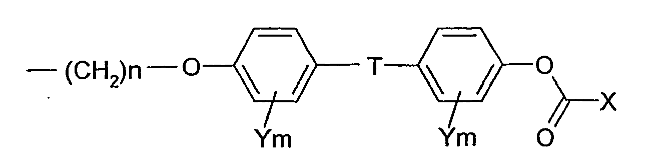 each R' represents an alkyl group having from 1 to 4 carbon atoms, T is 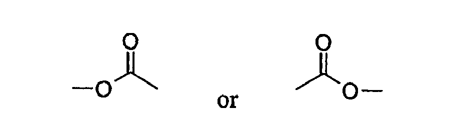 X represents an alkyl or halogen-substituted alkyl group having at least one chiral centre, Y represents a fluorine atom, m has a value of 0, 1 or 2 and n has a value of 10, 11 or 12.

The ferroelectric liquid crystal siloxane oligomers of US-A-5498368 exist as neat compounds or in mixtures which exhibit relatively high tilt angles. Measurements of the tilt angle of other liquid crystal materials, as disclosed in JP-A-01-144491 have shown not only a variation from polymer to polymer but also a reduction of the tilt angle with increasing temperature. The tilt angles of the ferroelectric liquid crystal materials of US-A-5498368 are substantially independent of temperature over a broad temperature range including ambient.

However, none of the cell structures disclosed in the art provide a bistable device which can be used in practical applications for example for use in large area FLC display panels, real time holographic devices, etc. There is therefore a need in the art for the development of such bistable materials.

We have found according to the invention that a high quality bookshelf FLC structure comprising a ferroelectric siloxane oligomer (including the oligomer disclosed in US-A-5498368) can be simply made and switched in a bistable fashion.

According to the first aspect of the invention there is provided, a bistable liquid crystal cell comprising a smectic C siloxane-containing compound arranged between alignment layers of polyamide or polyester, said siloxane-containing compound having the general formula 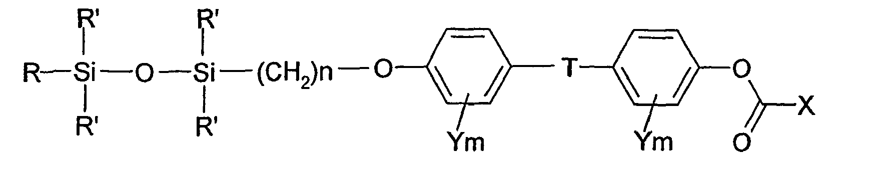 or 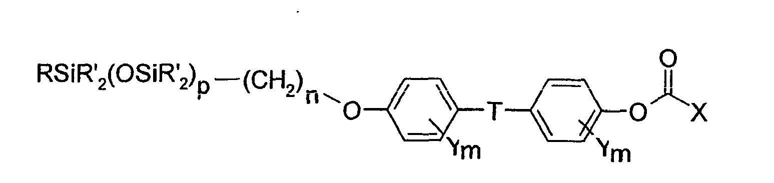 wherein R represents an alkyl group having from 1 to 10 carbon atoms or the group 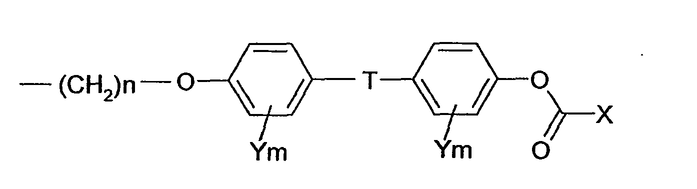 each R' represents an alkyl group having from 1 to 4 carbon atoms, T is 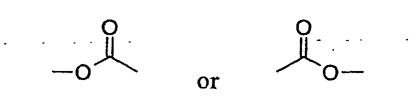 X represents an alkyl or halogen-substituted alkyl group having at least one chiral centre, Y represents a fluorine atom, m has a value of 0, 1 or 2, p has a value of 2, 3 or 4 and n has a value of 10, 11 or 12.

For the purposes of the present invention, the term "bistable" indicates that no substantial relaxation of the two possible switched states (i.e. the metastable states into which the molecular system can be forced by a control signal) of the liquid crystal can be observed.

The ferroelectric liquid crystal siloxane oligomers of the invention do not have smectic A or nematic phases; the smectic C phase is formed directly on cooling from the isotropic state. The most preferred ferroelectric liquid crystal siloxane oligomers of the invention are those of the formula where Z is Cl or F

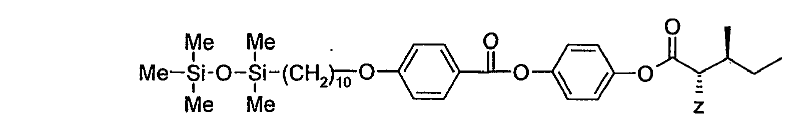

The ferroelectric liquid crystal siloxane oligomer is most preferably. 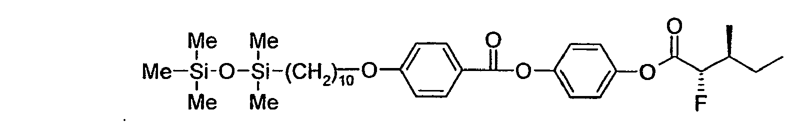 The crystal cell of the first aspect can further comprise one or more further ferroelectric liquid crystal materials. The further ferroelectric liquid crystal can be provided in combination with the smectic C siloxane-containing compound, preferably in a mixture thereof. The further ferroelectric liquid crystal is preferably provided at a level of 50% or below, more preferably 20% or below, most preferably 5% or below of the further ferroelectric liquid crystal-smetic C siloxane containing compound mixture.

Although we do not wish to be bound by any particular theory, we believe that the ability to achieve bistable switching is at least partly due or is enhanced by providing only a weak interaction, that is to say weak coupling, between the alignment layers and the surface layer of the smectic C phase immediately adjacent to the alignment layers and/or only a weak interaction between the various layers of the smectic C phase, especially between the said surface layer of the smectic C phase and the next adjacent layer of the smectic C phase. The nature of the alignment layer and/or the siloxane ferroelectric compound should be chosen accordingly. In the case of the alignment layers, layers made of polyamide and polyester are preferred.

The alignment layer is preferably a polyamide. The preferred polyamide is nylon-6,6, although nylon-6 is an alternative. Polyester alignment layers are also suitable, particularly an aliphatic/aromatic polyester such as a polyalkylene terephthalate, for example PET(polyethyleneterephthalate) or PBT (polybutyleneterephthalate). Polyimide alignment layers, which are the most commonly used alignment layers for liquid crystals, have not been found to allow bistable switching by application of an electric field alone without temperature change. The cell of the first aspect can be prepared according to methods and/or processes known in the art.

The present invention further provides, in the second aspect, a device comprising a cell as described in the first aspect of the invention. The device is preferably a multiplexed FLC large panel display or a liquid crystal on silicon (LCOS) device. The device of the second aspect can be prepared according to methods and/or processes known in the art.

The initial alignment of the liquid crystals can be brought about by applying an electric field having a value between 2 to 50V per µm cell thickness at a frequency having a value between 1 to 10KHz. The invention also includes in the third aspect a process for bistable switching of a ferroelectric liquid crystal device, in which a cell as defined above for the first aspect is switched by applying an electric field having a value between 2 to 50V per µm cell thickness.

Such voltages can be made available in multiplexed FLC large panel displays or in liquid crystal on silicon (LCOS) devices so devices may be aligned, and if necessary restored in situ. This offers a new route to bistable switching, other than the conventional methods of either sheer alignment (which is not applicable to display manufacture) or cooling down to the smectic C phase via nematic and smectic A phases.

Advantages of the invention include that no heating/cooling cycles are required to create the alignment required for bistable switching. Hence re-alignment can be carried out during the life of manufactured FLC displays if necessary. Display devices that have had their surface induced alignment damaged (e.g. by shock, deformation or temperature excursions) may be routinely repaired (e.g. during device start-up or shut-down) in service.

Since the materials do not have overlying smectic A or nematic phases, the tilt angle (and therefore the switching angle) is high and temperature independent. The formation of chevrons and related defects is not observed. Only such FLCs that exhibit the chiral smectic C through such a first order transition are capable of giving the 45 degree tilt angles that are necessary for efficient phase modulation. Previously there has been no practical method of making such materials truly bistable. Embodiments of the cells of this invention can be used for the display industry (with tilt angles near 22.5 degrees) as well as for real time holographic devices using phase modulation (with tilt angles approaching 45 degrees). The tilt angle obtained is chosen by selection of the mesogen present in the ferroelectric liquid crystal siloxane oligomer of the invention

Electro-optic bistability is the basis of the remarkable ability of FLC displays to be passively multiplexed (i.e. to operate without positioning transistor circuitry at each pixel). Achieving robust bistable surface alignment has been a major uncertainty in developing large area FLC display panels. In LCOS displays which do have an active backplane which effectively speeds up the frame time we believe that only bistable FLC devices can have a continuously valid image. As far as we know all commercial FLC LCOS devices do not rely on bistability and hence have to "switch off" the illumination at intervals. As the cells of the invention are truly bistable, they can have a continuously valid image.

Bistability is also required for the use of FLCs in devices for storing or accumulating information, e.g. optically addressed spatial light modulators for ultra high resolution displays for holographic systems. Latching switches for telecommunications applications also need to be bistable.

Layer rotation of the bookshelf structure can be achieved by application of an electric field with an asymmetric waveform, as described by I.G.Magnolis et al in the paper "Control of the electro-optic bistability of some useful FLCs useful for binary phase optical modulators" in Mol. Cryst. Liq. Cryst., 351, (2000) at page 305. Layer rotation with retention of a truly bistable material has not previously been achieved.

All preferred features of each of the aspects of the invention apply to all other aspects *mutatis mutandis.*

The invention may be put into practice in various ways and a number of specific embodiments will be described by way of example to illustrate the invention with reference to the accompanying drawings, in which:

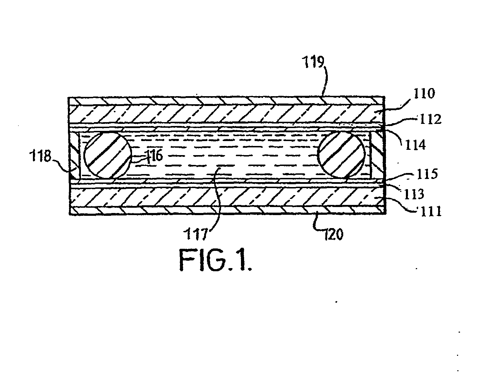

Figure 1 shows the structure of the cell as illustrated in schematic cross-sectional view. The siloxane-containing crystal material (117) is interposed between a pair of substrates (110, 111) which may be constructed of glass or a suitable polymer. The inner surfaces are coated with a transparent conducting film (112,113) of, for example, indium tin-oxide and aligning agent (114, 115). The aligning agent (114, 115) is preferably polyamide or alternatively PET or PBT in the cell of the present invention. Spacers (116) define the cell thickness. The conducting film may cover the whole inner surface of the substrate or may be etched into a suitable pattern.

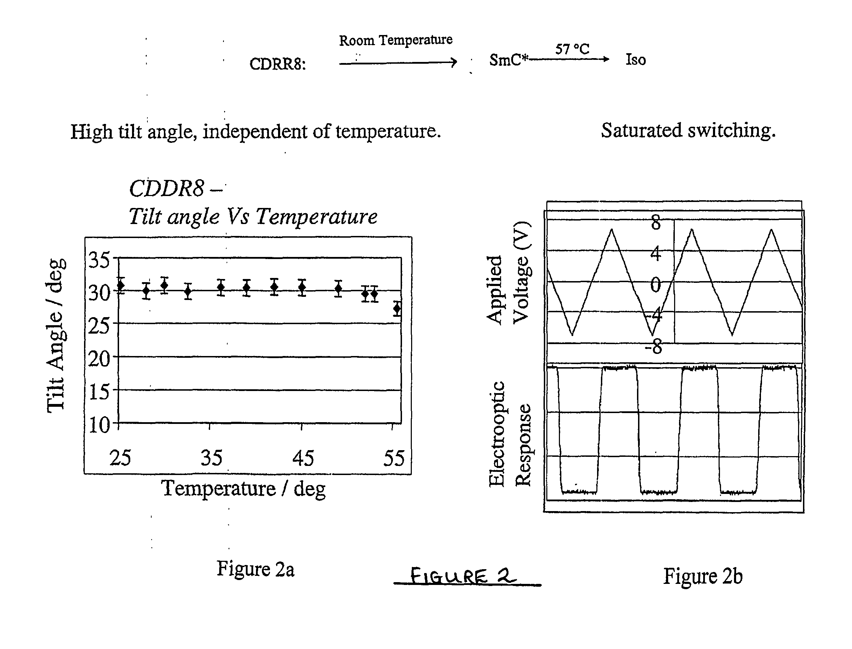

Figure 2 shows the consequences of the SmC* to isotropic transition.
Figure 2(a) shows the stability of the tilt angle at temperatures in the range 25 to 50°C.
Figure 2(b) shows the electrooptic response of the cell to an applied voltage varying between +7 and -7V.

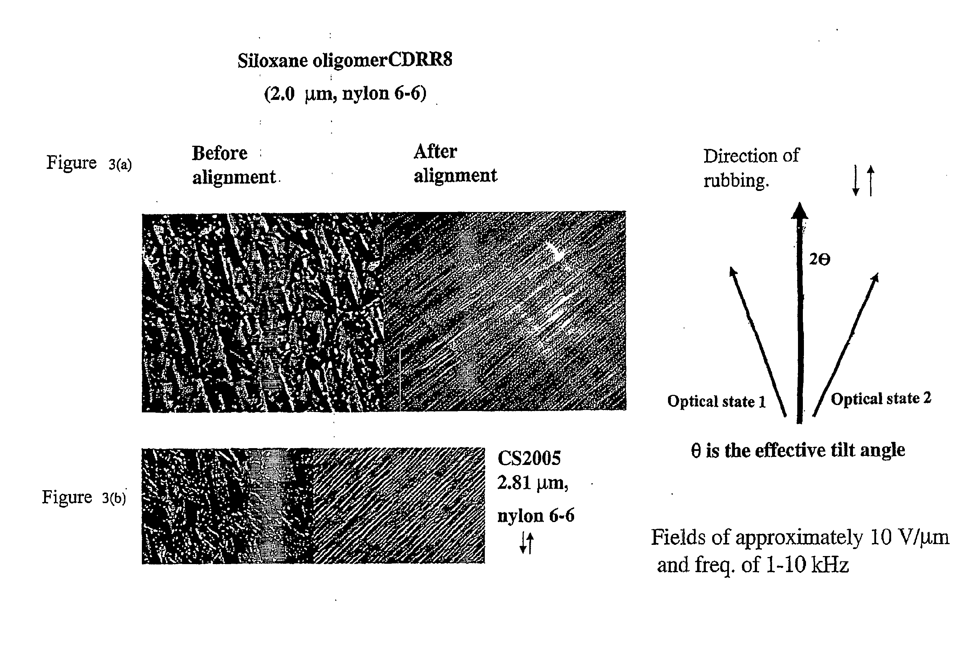

Figure 3(a) is a photomicrograph of the siloxane oligomer in the cell before and after alignment by electric field, showing the bookshelf structure achieved after alignment.
Figure 3(b) shows the structures before and after alignment of a commercial FLC aligned by prior art methods.

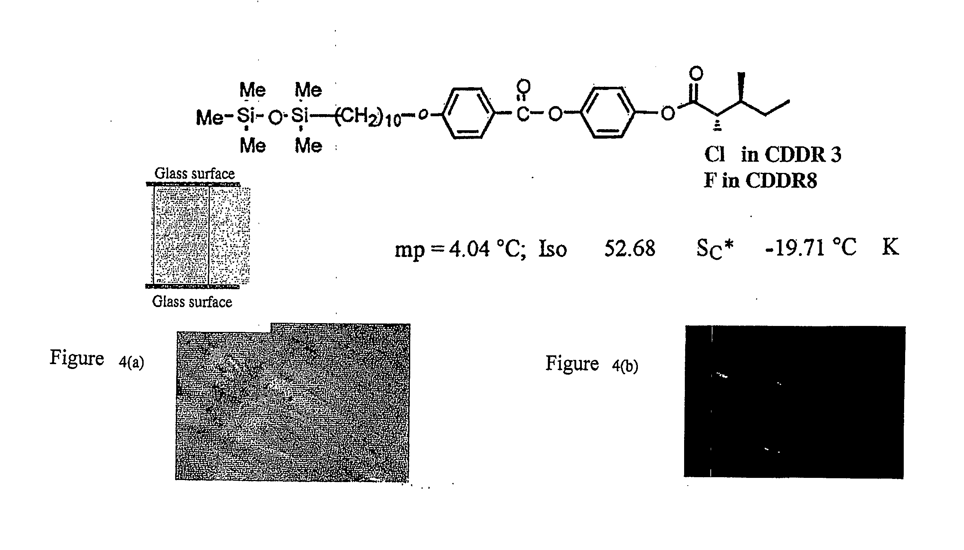

Figure 4 illustrates the bistable switched states of chiral smectic C experimental siloxane oligomers CDRR³ and CDRR⁸.
Figures 4(a) and (b) are photographs of light taken through the cell between crossed polarisers in the positively and negatively switched conditions. Figure 4(a) shows that light is transmitted in one state (the bright state) whereas Figure 4(b) shows that no light is transmitted in the other state (the dark state). The observed behaviour suggests decoupling from the surface due to long siloxane chains. This is also suggested by layer rotation.

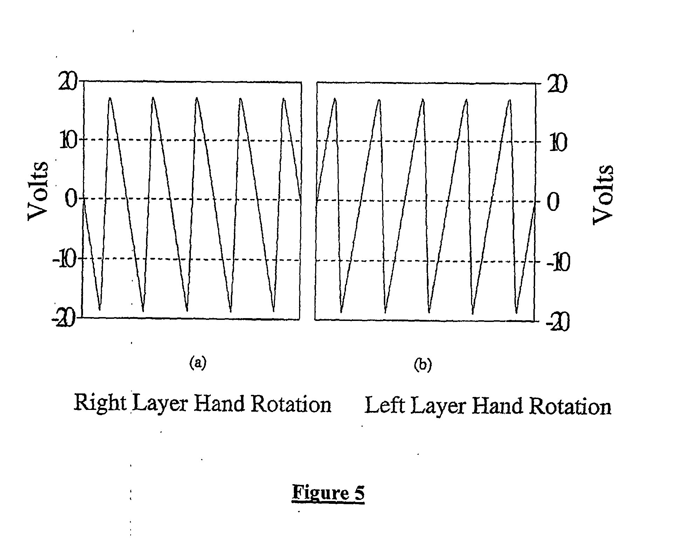

Figures 5(a) and (b) show asymmetric waveforms which can be used to induce layer rotation of the FLC in the cell, as described in the Mol. Cryst. Liq. Cryst. 351, 205. 2000.

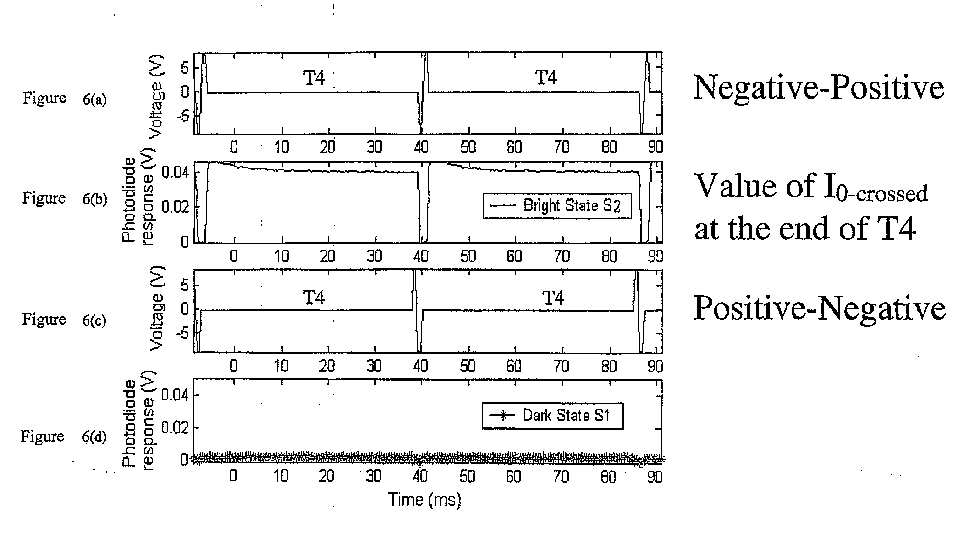

Figure 6(a) shows the voltage applied to the cell over time. Positive voltage is applied so that the FLC is aligned in its bright state followed by no voltage then negative voltage. Figure 6(b) shows the response of a photodiode to light from crossed polarisers passing through the cell. The response is positive (light is transmitted) after application of the positive voltage and substantially stable while no voltage is applied and drops to zero when a negative voltage is applied.
Figure 6(c) also shows the voltage applied to the cell over time. In this case negative voltage is applied so that the FLC is aligned in its dark state followed by no voltage then positive voltage. Figure 6(d) shows the response of the photodiode. No response is recorded (no light is transmitted).

The present invention will now be illustrated by reference to one or more of the following non-limiting examples.

### Example

A ferroelectric liquid crystal siloxane oligomer of the formula 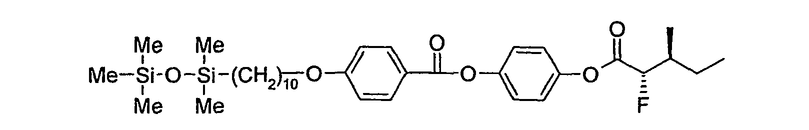 (CDRR8) was assembled in a cell of the type shown in Figure 1. The cell was 2µm thick. The alignment layers 14, 15 were rubbed polyamide layers 20nm thick. The cell was heated to above 53°C to convert the siloxane oligomer to the isotropic state and cooled to form the smectic C phase. An electric field of 20V at frequency 1KHz was applied.

## Claims

1. A bistable liquid crystal cell comprising a ferroelectric compound having a smectic C phase, arranged between alignment layers of polyamide or polyester wherein said compound has the general formula 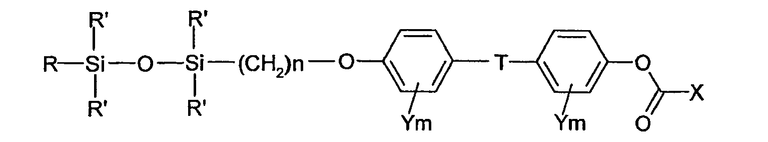 or 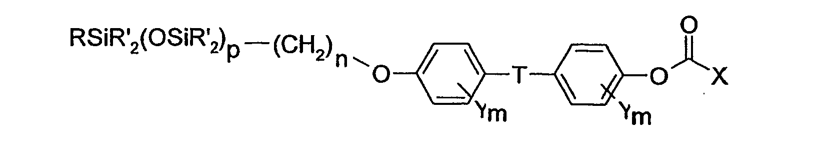 wherein R represents an alkyl group having from 1 to 10 carbon atoms or the group 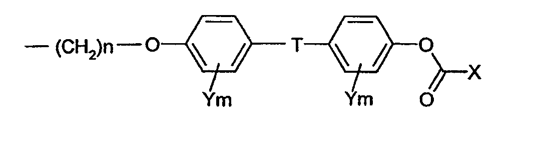 each R' represents an alkyl group having from 1 to 4 carbon atoms, T is 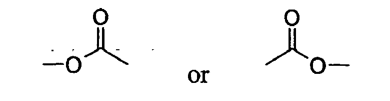 X represents an alkyl or halogen-substituted alkyl group having at least one chiral centre, Y represents a fluorine atom, m has a value of 0, 1 or 2, p has a value of 2, 3 or 4 and n has a value of 10, 11 or 12.

2. A cell as claimed in claim 1 wherein the compound is 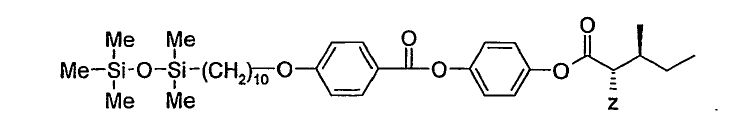 wherein Z is F or Cl.

3. A cell as claimed in any one of claims 1 to 2 wherein the alignment layer is nylon-6,6 or nylon-6.

4. A cell as claimed in any one of claims 1 to 3 wherein the alignment layer is an aliphatic/aromatic polyester.

5. A cell as claimed in claim 4 wherein the alignment layer is PET (polyethyleneterephthalate) or PBT (polybutyleneterephthalate).

6. A cell as claimed in any one of claims 1 to 5 wherein the siloxane-comprising material is disposed between two substrates, at least one of said substrates supporting a transparent conducting film.

7. A cell as claimed in any proceeding claim comprising a mesogen selected to provide a tilt angle of around 22.5 degrees

8. A cell as claimed in any one of claims 1 to 6 comprising a mesogen selected to provide a tilt angle of around 45 degrees.

9. A ferroelectric liquid crystal device comprising at least one cell as claimed in any one of claims 1 to 8.

10. A device as claimed in claim 9, wherein said device is one of a multiplexed FLC large panel display or a liquid crystal on silicon (LCOS) device.

11. A process for bistable switching of a ferroelectric liquid crystal device, in which a cell as claimed in any one of claims 1 to 8, is switched by applying an electric field having a value in the range 2 to 50V per µm cell thickness.

## Patentansprüche

1. Bistabile Flüssigkristallzelle, welche eine ferroelektrische Verbindung mit einer smektischen C-Phase aufweist, die zwischen Ausrichtungsschichten von Polyamid oder Polyester angeordnet ist, wobei besagte Verbindung die allgemeine Formel aufweist: 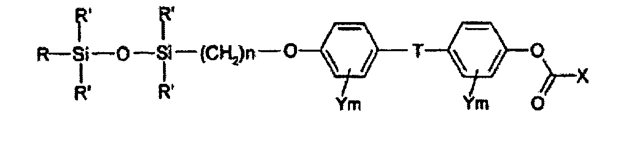 oder 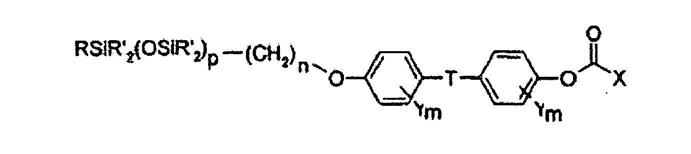 wobei R eine Alkyl-Gruppe mit 1 bis 10 Kohlenstoffatomen oder die Gruppe 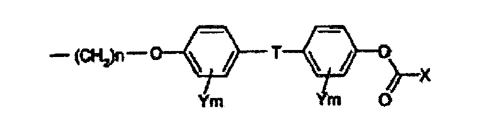 darstellt, wobei jedes R' eine Alkylgruppe mit 1 bis 4 Kohlenstoffatomen repräsentiert, T 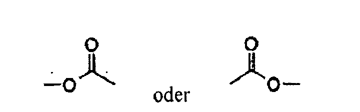 ist, X eine Alkyl- oder eine Halogen-substituierte Alkylgruppe mit zumindest einem chiralen Zentrum darstellt, Y ein Fluor-Atom darstellt, m einen Wert von 0, 1 oder 2 hat, p einen Wert von 2, 3 oder 4 hat und n einen Wert von 10, 11 oder 12 hat.

2. Zelle nach Anspruch 1, wobei die Verbindung ist: 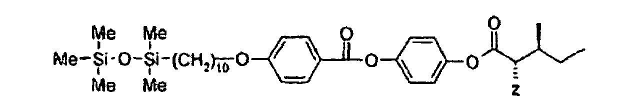 wobei Z F oder Cl ist.

3. Zelle nach einem der Ansprüche 1 bis 2, wobei die Ausrichtungsschicht Nylon-6,6 oder Nylon-6 ist.

4. Zelle nach einem der Ansprüche 1 bis 3, wobei die Ausrichtungsschicht ein aliphatischer/aromatischer Polyester ist.

5. Zelle nach Anspruch 4, wobei die Ausrichtungsschicht PET (Polyethylenterephthalat) oder PBT (Polybutylenterephthalat) ist.

6. Zelle nach einem der Ansprüche 1 bis 5, wobei das Siloxan-enthaltende Material zwischen zwei Substraten angeordnet ist, wobei zumindest eines der besagten Substrate einen transparenten, leitenden Film trägt.

7. Zelle nach einem der vorangehenden Ansprüche, welche ein Mesogen aufweist, das ausgewählt ist, um einen Neigungswinkel von etwa 22,5 Grad bereitzustellen.

8. Zelle nach einem der Ansprüche 1 bis 6, welche ein Mesogen aufweist, das ausgewählt ist, um einen Neigungswinkel von etwa 45 Grad bereitzustellen.

9. Ferroelektrische Flüssigkristallvorrichtung, welche zumindest eine Zelle nach einem der Ansprüche 1 bis 8 aufweist.

10. Vorrichtung nach Anspruch 9, wobei besagte Vorrichtung eine von einer vielfachen FLC-Großfeldanzeige oder einer Flüssigkristall auf Silikon (LCOS)-Vorrichtung ist.

11. Verfahren für das bistabile Schalten einer ferroelektrischen Flüssigkristallvorrichtung, in welcher eine Zelle nach einem der Ansprüche 1 bis 8 durch Anlegen eines elektrischen Feldes mit einem Wert im Bereich von 2 bis 50 V pro µm Zelldicke geschaltet wird.

## Revendications

1. Cellule à cristaux liquides bistable comprenant un composé ferroélectrique ayant une phase C smectique, se trouvant entre des couches d'alignement de polyamide ou de polyester, dans laquelle ledit composé a la formule générale : 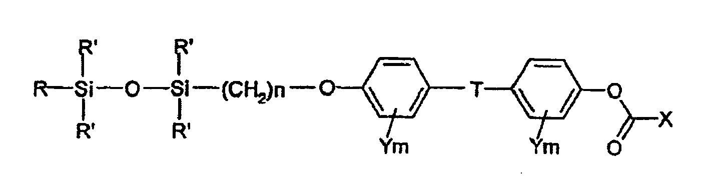 ou 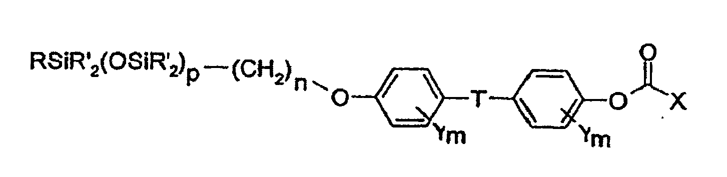 dans laquelle R représente un groupe alkyle ayant de 1 à 10 atome(s) de carbone ou le groupe, 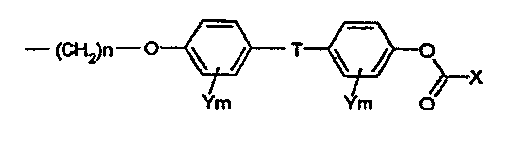 chaque R' représente un groupe alkyle ayant 1 à 4 atome(s) de carbone, T est 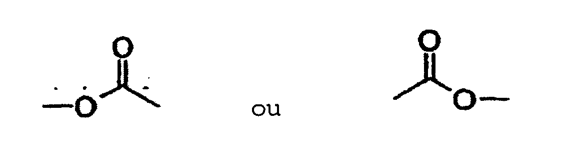 X représente un groupe alkyle ou alkyle substitué par un halogène, ayant au moins un centre chiral, Y représente un atome de fluor, m a pour valeur 0, 1 ou 2, p a pour valeur 2, 3 ou 4 et n a pour valeur 10, 11 ou 12.

2. Cellule selon la revendication 1, dans laquelle le composé est : 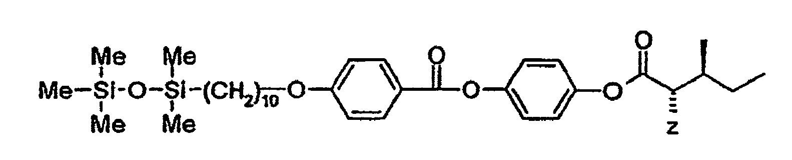 dans laquelle Z est F ou Cl.

3. Cellule selon l'une des revendications 1 à 2, dans laquelle la couche d'alignement est du nylon-6,6 ou du nylon-6.

4. Cellule selon l'une quelconque des revendications 1 à 3, dans laquelle la couche d'alignement est un polyester aliphatique/aromatique.

5. Cellule selon la revendication 4, dans laquelle la couche d'alignement est du téréphtalate de polyéthylène (PET- polyethyleneterephthalate) ou du téréphtalate de polybutylène (PBT- polybutyleneterephthalate).

6. Cellule selon l'une quelconque des revendications 1 à 5, dans laquelle la matière comprenant du siloxane est disposée entre deux substrats, au moins un desdits substrats supportant un film conducteur transparent.

7. Cellule selon l'une quelconque des revendications précédentes comprenant un mésogène choisi de manière à procurer un angle d'inclinaison d'environ 22,5°.

8. Cellule selon l'une quelconque des revendications 1 à 6, comprenant un mésogène choisi de manière à procurer un angle d'inclinaison d'environ 45°.

9. Dispositif à cristaux liquides ferroélectrique comprenant au moins une cellule selon l'une quelconque des revendications 1 à 8.

10. Dispositif selon la revendication 9, ledit dispositif étant un dispositif d'affichage à grand panneau FLC multiplexé ou un dispositif à cristaux liquides sur silicium (LCOS- liquid crystal on silicon).

11. Procédé pour commutation bistable d'un dispositif à cristaux liquides ferroélectrique, dans lequel une cellule selon l'une quelconque des revendications 1 à 8 est commutée par application d'un champ électrique ayant une valeur située dans la plage de 2 à 50 V par µm d'épaisseur de cellule.
